# EUROPEAN PATENT APPLICATION

(11) **EP 4 650 396 A1**
(43) Date of publication of application: **19.11.2025**
(21) Application number: 25166247.4
(22) Date of filing: 26.03.2025
(51) Int. Cl.: C08L 9/06, C08K 3/36, C08L 25/16, B60C 1/00

(54) **RUBBER COMPOSITION FOR TIRES AND TIRE**

(30) Priority: 17.05.2024 JP 2024080631
(71) Applicant: Toyo Tire Corporation, Itami-shi, Hyogo 664-0847 (JP)
(72) Inventor: IKEUCHI, Yuki, Itami-shi, Hyogo, 664-0847 (JP); TOMORI, Daiki, Itami-shi, Hyogo, 664-0847 (JP)
(74) Representative: Ricker, Mathias

(57) **Abstract**

A rubber composition for tires according to an embodiment includes a rubber component containing a solution-polymerized styrene butadiene rubber, a filler including silica, a resin, and a low-temperature plasticizer having an SP value of 8.0 to 8.5 (call/m³)^{1/2}. Per 100 parts by mass of the rubber component, the amount of silica is 100 to 300 parts by mass, the amount of resin is 40 to 100 parts by mass, and the amount of low-temperature plasticizer is 15 to 50 parts by mass. The proportion of silica in the filler is 80 mass% or more. The mass ratio of the amount of silica to the amount of low-temperature plasticizer (silica/low-temperature plasticizer) is 5.00 or more.

## Description

### BACKGROUND OF THE INVENTION

### 1. Field of the Invention

The present invention relates to a rubber composition for tires and also to a tire using the same.

### 2. Description of Related Art

Techniques are known to incorporate silica or a resin into a tread-forming rubber composition in order to enhance the wet grip performance of a tire (see, e.g., JP2016-003254A and JP2019-182920A). However, when a large amount of silica is incorporated into a rubber composition in order to further improve the wet grip performance, silica is likely to aggregate, making it difficult to obtain sufficient wet grip performance.

For the purpose of imparting excellent wet grip performance, JP2007-277307A proposes incorporating a large amount of filler including silica and carbon black together with other inorganic fillers, and further incorporating a specific resin and a low-temperature plasticizer.

Incidentally, JP2016-037544A proposes incorporating a large amount of resin and also incorporating a low-temperature plasticizer in order to enhance grip performance on dry road surfaces at the initial stage and during driving while maintaining sufficient wear resistance. However, JP2016-037544A mentions carbon black as a preferred filler from the viewpoint of wear resistance, and does not describe an example in which silica is incorporated.

### SUMMARY OF THE INVENTION

As described above, JP2007-277307A describes that a large amount of filler including silica is incorporated, and also a resin and a low-temperature plasticizer are incorporated. However, in the rubber composition described in JP2007-277307A, a considerable amount of carbon black and other inorganic fillers are incorporated together with silica, and the proportion of silica in the filler is low. Therefore, in the case where a large amount of silica is incorporated, and the proportion of silica in the filler is high, the achievement of improved wet grip performance remains open to investigation.

In view of the above points, an object of an embodiment of the invention is to provide a rubber composition for tires excellent in wet grip performance.

The invention includes the following embodiments.
[1] A rubber composition for tires, including a rubber component containing a solution-polymerized styrene butadiene rubber, a filler including silica, a resin, and a low-temperature plasticizer having an SP value of 8.0 to 8.5 (cal/cm³)^{1/2}, in which the amount of the silica is 100 to 300 parts by mass per 100 parts by mass of the rubber component, the amount of the resin is 40 to 100 parts by mass per 100 parts by mass of the rubber component, the amount of the low-temperature plasticizer is 15 to 50 parts by mass per 100 parts by mass of the rubber component, the proportion of the silica in the filler is 80 mass% or more, and the mass ratio of the amount of the silica to the amount of the low-temperature plasticizer (silica/low-temperature plasticizer) is 5.00 or more.
[2] The rubber composition for tires according to [1], in which the solution-polymerized styrene butadiene rubber includes a solution-polymerized styrene butadiene rubber having a glass transition temperature of -20°C or more.
[3] The rubber composition for tires according to [1] or [2], in which the resin has a softening point of 100°C or less.
[4] The rubber composition for tires according to any one of [1] to [3], in which the resin includes a styrene-based resin.
[5] A tire having a tread formed from the rubber composition for tires according to any one of [1] to [4].

According to an embodiment of the invention, a rubber composition for tires excellent in wet grip performance can be provided.

### DESCRIPTION OF EMBODIMENTS

A rubber composition for tires according to this embodiment (hereinafter, also simply referred to as "rubber composition") includes a rubber component containing a solution-polymerized styrene butadiene rubber, a filler including silica, a resin, and a low-temperature plasticizer having an SP value of 8.0 to 8.5 (cal/cm³)^{1/2}.

A solution-polymerized styrene butadiene rubber (SSBR) is a styrene butadiene rubber obtained by anionic polymerization in an organic solvent. The SSBR may be a modified SSBR that has been modified at its ends or backbone, or may also be an unmodified SSBR with no modification. The SSBR preferably includes a modified SSBR. In one embodiment, the proportion of the modified SSBR in the SSBR is preferably 30 mass% or more, more preferably 50 mass% or more, and still more preferably 80 mass% or more, and may also be 100 mass%.

As the modified SSBR, an SSBR that has a functional group introduced into its ends and/or backbone and thus has been modified with the functional group is used. The functional group preferably contains an oxygen atom and/or a nitrogen atom and may be, for example, at least one member selected from the group consisting of an amino group, a hydroxy group, an alkoxy group, an alkoxysilyl group, an epoxy group, and a carboxy group. As a result of using such a modified SSBR having a functional group, the improving effect on the dispersibility of silica can be enhanced.

The SSBR used preferably has a glass transition temperature (Tg) of -20°C or more. That is, the SSBR preferably includes an SSBR having a Tg of -20°C or more (hereinafter, sometimes referred to as high-Tg SSBR). As a result of using such an SSBR having a high Tg, the improving effect on wet grip performance can be enhanced. In that case, the SSBR may be a high-Tg SSBR alone, or may also be a combination of a high-Tg SSBR and an SSBR having a Tg of less than -20°C. The glass transition temperature of the high-Tg SSBR is more preferably -20°C to 10°C, and still more preferably -15°C to 5°C. Incidentally, the high-Tg SSBR may be a modified SSBR or an unmodified SSBR, and is preferably a modified SSBR.

In one embodiment, the proportion of the high-Tg SSBR in the SSBR is preferably 30 mass% or more, more preferably 50 mass% or more, and still more preferably 80 mass% or more, and may also be 100 mass%.

As used herein, the glass transition temperature of an SSBR is a value measured by a differential scanning calorimetry (DSC) method in accordance with JIS K6240:2011 at a temperature rise rate of 20°C/min (measurement temperature range: - 150°C to 50°C).

The rubber component may be composed only of an SSBR, but may also contain other diene rubbers together with the SSBR. Here, a diene rubber refers to a rubber having a repeating unit corresponding to a diene monomer having a conjugated double bond, and contains a carbon-carbon double bond in the polymer backbone.

As specific examples of other diene rubbers, natural rubbers (NR), synthetic isoprene rubbers (IR), butadiene rubbers (BR), emulsion-polymerized styrene butadiene rubbers (ESBR), nitrile rubbers (NBR), chloroprene rubbers (CR), styrene-isoprene copolymer rubbers, butadiene-isoprene copolymer rubbers, styrene-isoprene-butadiene copolymer rubbers, and the like can be mentioned. The concept of these diene rubbers also encompasses those modified at the ends or the backbone as necessary (e.g., end-modified BR) and those reformed to impart desired properties (e.g., reformed NR). One of these other diene rubbers may be used alone, and it is also possible to use two or more kinds together.

In one embodiment, the proportion of the SSBR in the rubber component is preferably 50 mass% or more, more preferably 70 mass% or more, more preferably 90 mass% or more, and still more preferably 100 mass% (i.e., SSBR alone).

The rubber composition according to this embodiment incorporates silica as a filler. The silica used is preferably wet silica, such as wet-precipitated silica or wet-gelled silica, for example.

The nitrogen adsorption specific surface area of silica is not particularly limited and may be, for example, 100 to 300 m²/g, 150 to 250 m²/g, or 180 to 220 m²/g. The nitrogen adsorption specific surface area of silica is a BET specific surface area measured in accordance with the BET Method described in JIS K6430:2008.

The silica content is 100 to 300 parts by mass per 100 parts by mass of the rubber component. When the loading of silica is high like this, wet grip performance can be improved. The silica content is, per 100 parts by mass of the rubber component, preferably 100 to 200 parts by mass, more preferably 110 to 180 parts by mass, and still more preferably 120 to 150 parts by mass.

The filler may be silica alone, and it is also possible to incorporate other fillers together with silica. As other fillers, carbon black and inorganic fillers can be mentioned, and carbon black is preferable.

The proportion of silica in the filler is 80 mass% or more. When the percentage of silica in the entire filler is 80 mass% or more like this, wet grip performance and wear resistance can be improved. The proportion of silica in the filler is preferably 90 mass% or more, more preferably 92 mass% or more, and still more preferably 95 mass% or more, and may also be 100 mass% (i.e., silica alone).

In the case where carbon black is incorporated as a filler together with silica, the amount of carbon black incorporated is not particularly limited as long as the proportion of silica is 80 mass% or more as described above, and may be, for example, 15 parts by mass or less, 10 parts by mass or less, or 3 to 10 parts by mass, per 100 parts by mass of the rubber component.

Incidentally, carbon black is not particularly limited, and known various species can be used. Specifically, SAF grade (N100 series), ISAF grade (N200 series), HAF grade (N300 series), FEF grade (N500 series), and GPF grade (N600 series) (all ASTM grades) can be mentioned. One of these grades of carbon black may be used alone, and it is also possible to use a combination of two or more kinds.

The rubber composition according to this embodiment incorporates a resin in an amount of 40 to 100 parts by mass per 100 parts by mass of the rubber component. As a result of incorporating such a large amount of resin, wet grip performance can be improved. The resin content is, per 100 parts by mass of the rubber component, preferably 40 to 80 parts by mass, more preferably 45 to 70 parts by mass, and still more preferably 50 to 65 parts by mass.

From the viewpoint of enhancing the improving effect on wet grip performance, the resin used preferably has a softening point of 100°C or less. The softening point of the resin is more preferably 60°C to 100°C, more preferably 70°C to 95°C, and still more preferably 80°C to 90°C.

As used herein, the softening point of a resin is a value measured using a ring and ball softening point measuring apparatus in accordance with JIS K6220-1:2015.

As resins, for example, various thermoplastic resins such as styrene-based resins, terpene-based resins (e.g., polyterpene resin, terpene phenol resin), coumarone-based resins (e.g., coumarone resin, coumarone-indene resin), petroleum resins (e.g., C5 petroleum resin, C9 petroleum resin, C5/C9 petroleum resin), and rosin-based resins (e.g., natural resin rosin, rosin-modified maleic acid resin) can be mentioned. One of them may be used alone, and it is also possible to use two or more kinds together.

Among them, a styrene-based resin is preferable as the resin because it has good compatibility with SSBRs and is excellent in the improving effect on wet grip performance. That is, in one embodiment, the resin preferably includes a styrene-based resin. The proportion of the styrene-based resin in the resin is preferably 50 mass% or more, more preferably 70 mass% or more, and more preferably 90 mass% or more, and may also be 100 mass% (i.e., styrene-based resin alone).

A styrene-based resin is a polymer that uses a styrene-based monomer as a constituent monomer, and is a general term for polymers of styrene-based monomers and polymers containing a styrene-based monomer as a main component (50 mass% or more). The styrene-based resin may be a homopolymer obtained by polymerizing one kind of styrene-based monomer alone, a copolymer obtained by copolymerizing two or more kinds of styrene-based monomers, or a copolymer of a styrene-based monomer and other monomers copolymerizable therewith.

As styrene-based monomers, for example, styrene, α-methylstyrene, o-methylstyrene, m-methylstyrene, p-methylstyrene, p-methoxystyrene, p-tert-butylstyrene, p-phenylstyrene, chlorostyrene, and the like can be mentioned.

As specific examples of styrene-based resins, polystyrene, α-methylstyrene homopolymers, styrene/α-methylstyrene copolymers, styrene-based monomer/aliphatic monomer copolymers, α-methylstyrene/aliphatic monomer copolymers, styrene-based monomer/α-methylstyrene/aliphatic monomer copolymers, and the like can be mentioned. Among them, α-methylstyrene-based resins containing α-methylstyrene as a constituent monomer are preferable.

The rubber composition according to this embodiment incorporates a low-temperature plasticizer having an SP value (solubility parameter) of 8.0 to 8.5 (cal/cm³)^{1/2}. It is believed that a low-temperature plasticizer having such an SP value has good compatibility with SSBRs, and thus can improve wet grip performance and wear resistance. In particular, without intending to be limited by theory, it is believed that such a low-temperature plasticizer reduces the intermolecular forces that impede the micro-Brownian motion of the polymer chains of an SSBR, thus leading to an enhanced plasticizing effect and improved compatibility with SSBRs. In addition, it is believed that such a low-temperature plasticizer improves not only compatibility with SSBRs, but also the dispersion of silica due to its polarity (SP value), thus leading to improved wet grip performance.

The SP value of the low-temperature plasticizer is preferably 8.1 to 8.5 (cal/cm³)^{1/2}, and more preferably 8.2 to 8.4 (cal/cm³)^{1/2}.

As used herein, an SP value is a value calculated by the method described in *"*Gijutsusha no Tame no Jitsugaku Kobunshi (Practical Polymers for Engineers)" by MUKAI Junji and KINJO Noriyuki (published by Kodansha on October 1, 1981), pages 71 to 77. An SP value is, in particular, a value δ [(cal/cm³)^{1/2}] at 25°C calculated by the Fedors formula described in the same document. Incidentally, 1 (cal/cm³)^{1/2} ≈ 2.05 (MPa)^{1/2}. Therefore, an SP value of 8.0 to 8.5 (cal/cm³)^{1/2} means 16.4 to 17.4 (MPa)^{1/2}.

A low-temperature plasticizer is a plasticizer having a freezing point of -50°C or less. The freezing point of the low-temperature plasticizer is more preferably -60°C or less. The lower limit of the freezing point of the low-temperature plasticizer is not particularly limited.

As specific examples of low-temperature plasticizers having an SP value of 8.0 to 8.5 (cal/cm³)^{1/2}, tris(2-ethylhexyl) phosphate (TOP), bis(2-ethylhexyl) sebacate (DOS), bis(2-ethylhexyl) adipate (DOA), and the like can be mentioned. One of them may be used alone, and it is also possible to use two or more kinds together.

The low-temperature plasticizer content is 15 to 50 parts by mass per 100 parts by mass of the rubber component. When the low-temperature plasticizer content is 15 parts by mass or more, the dispersibility of silica in the case where silica is incorporated at a high loading as described above can be improved, thereby improving the wet grip performance. The low-temperature plasticizer content is more preferably 18 to 40 parts by mass, still more preferably 20 to 30 parts by mass, per 100 parts by mass of the rubber component.

The low-temperature plasticizer content is also set as a ratio to the amount of silica as follows. That is, the mass ratio of the amount of silica to the amount of low-temperature plasticizer (silica/low-temperature plasticizer) is 5.00 or more. As a result, an excessive increase in the plasticizing effect of the low-temperature plasticizer can be suppressed, the shear force acting during the mixing of the rubber composition can be enhanced, and the dispersibility of silica can be improved. The mass ratio (silica/low-temperature plasticizer) is preferably 5.00 to 15.00, more preferably 5.10 to 10.00, more preferably 5.50 to 8.00, and still more preferably 6.00 to 7.00.

The rubber composition according to this embodiment may further include an oil. As oils, for example, mineral oils such as paraffinic oils, naphthenic oils, and aromatic oils, vegetable oils such as linseed oil, safflower oil, soybean oil, corn oil, castor oil, rapeseed oil, and cottonseed oil, and the like can be mentioned. One of them can be used alone, and it is also possible to use a combination of two or more kinds.

The oil content is not particularly limited and is, for example, per 100 parts by mass of the rubber component, preferably 10 to 150 parts by mass, more preferably 15 to 120 parts by mass, and still more preferably 20 to 100 parts by mass. In the case where an oil-extended rubber is used as a rubber component, the oil content also includes the amount of oil contained in the oil-extended rubber.

In addition to the above components, the rubber composition according to this embodiment may also incorporate various additives generally used in rubber compositions, such as silane coupling agents, zinc oxide, stearic acid, waxes, antioxidants, vulcanizing agents, and vulcanization accelerators.

As silane coupling agents, for example, a sulfide silane coupling agent, a mercapto silane coupling agent, and a thioester group-containing silane coupling agent can be mentioned. The silane coupling agent content is not particularly limited and may be, for example, 5 to 20 parts by mass, or 5 to 15 parts by mass, per 100 parts by mass of silica.

The zinc oxide content is not particularly limited and may be, for example, 0 to 10 parts by mass, 0.5 to 7 parts by mass, or 1 to 5 parts by mass, per 100 parts by mass of the rubber component.

The stearic acid content is not particularly limited and may be, for example, 0 to 10 parts by mass, 0.5 to 5 parts by mass, or 1 to 4 parts by mass, per 100 parts by mass of the rubber component.

The wax content is not particularly limited and may be, for example, 0 to 10 parts by mass, 0.5 to 5 parts by mass, or 1 to 4 parts by mass, per 100 parts by mass of the rubber component.

As antioxidants, for example, amine-ketone-based, aromatic secondary amine-based, monophenol-based, bisphenol-based, benzimidazole-based, and like various antioxidants can be mentioned. One of them can be used alone, and it is also possible to use a combination of two or more kinds. The antioxidant content is not particularly limited and may be, for example, 0 to 10 parts by mass, 0.5 to 5 parts by mass, or 1 to 4 parts by mass, per 100 parts by mass of the rubber component.

Sulfur is preferably used as a vulcanizing agent. The vulcanizing agent content is not particularly limited and may be 0.1 to 10 parts by mass, 0.5 to 5 parts by mass, or 1 to 3 parts by mass, per 100 parts by mass of the rubber component.

As vulcanization accelerators, for example, sulfenamide-based, guanidine-based, thiuram-based, thiazole-based, and like various vulcanization accelerators can be mentioned. One of them can be used alone, and it is also possible to use a combination of two or more kinds. The vulcanization accelerator content is not particularly limited and may be 0.1 to 10 parts by mass, 0.5 to 5 parts by mass, or 1 to 4 parts by mass, per 100 parts by mass of the rubber component.

The rubber composition according to this embodiment can be made by kneading in the usual manner using a commonly used mixing machine, such as a Banbury mixer, a kneader, or a roll. That is, for example, in the first mixing stage, additives excluding a vulcanizing agent and a vulcanization accelerator are added to a rubber component and mixed, and then, in the final mixing stage, a vulcanizing agent and a vulcanization accelerator are added to the obtained mixture and mixed, whereby a rubber composition can be prepared.

The rubber composition according to this embodiment can be used for tires. As tires, pneumatic tires of various sizes for various applications, including tires for passenger cars, large tires for trucks and buses, and the like, can be mentioned. The rubber composition is preferably used for high performance tires such as racing tires and UHP (ultra-high performance) tires. With respect to application sites in a tire, use as a tread rubber is preferable.

A tire according to one embodiment has a tread rubber made using the above rubber composition. That is, the tire according to one embodiment is a tire having a tread formed from the above rubber composition. Some tire tread rubbers have a two-layer structure composed of a cap rubber and a base rubber, while others have a single-layer structure having the two integrated. In the case of a single-layer structure, it is preferable that the tread rubber is formed of the above rubber composition. In the case of a two-layer structure, it is preferable that the outer cap rubber contacting the road surface is formed of the above rubber composition, but it is also possible that both the cap rubber and the base rubber are formed of the above rubber composition.

The method for producing a tire is not particularly limited. For example, the above rubber composition is formed into a predetermined shape by extrusion in the usual manner to give an unvulcanized tread rubber member. The tread rubber member is combined with other tire members to make an unvulcanized tire (green tire). Subsequently, vulcanization molding is performed at 140°C to 180°C, for example, whereby a tire can be produced.

### Examples

Hereinafter, examples of the invention will be shown, but the invention is not limited to these examples.

Components used in the examples and comparative examples are as follows.
- SSBR 1: Modified SSBR, 37.5 phr oil-extended product, "TUFDENE E581" (Tg: -27°C) manufactured by Asahi Kasei Corporation
- SSBR 2: Unmodified SSBR, 50 phr oil-extended product, "TUFDENE 4850" (Tg: -25°C) manufactured by Asahi Kasei Corporation
- SSBR 3: Modified SSBR, 37.5 phr oil-extended product, "SE6233" (Tg: -2°C) manufactured by Sumitomo Chemical Co., Ltd.
- Silica: "Nipsil AQ" (nitrogen adsorption specific surface area: 205 m²/g) manufactured by Tosoh Silica Corporation
- Carbon black: "SEAST 9" manufactured by Tokai Carbon Co., Ltd.
- Silane coupling agent: "Si69" manufactured by Evonik Japan Co., Ltd.
- Resin 1: Terpene-based resin, softening point: 115°C, "SYLVATRAXX 4150" manufactured by Kraton Corporation
- Resin 2: α-Methylstyrene-based resin, softening point: 85°C, "SYLVATRAXX 4401" manufactured by Kraton Corporation
- Mineral oil: naphthenic oil, "PROCESS NC140" manufactured by ENEOS Corporation
- Low-temperature plasticizer 1: Bis[2-(2-butoxyethoxy)ethyl]adipate, "BXA-N" (SP value: 8.72) manufactured by DAIHACHI Chemical Industry Co., Ltd.
- Low-temperature plasticizer 2: Tris(2-ethylhexyl)phosphate, "TOP" (SP value: 8.20) manufactured by DAIHACHI Chemical Industry Co., Ltd.
- Low-temperature plasticizer 3: Bis(2-ethylhexyl) sebacate, "DOS" (SP value: 8.39) manufactured by DAIHACHI Chemical Industry Co., Ltd.
- Zinc oxide: "Zinc Oxide No. 1" manufactured by Mitsui Mining & Smelting Co., Ltd.
- Stearic acid: "LUNAC S-20" manufactured by Kao Corporation
- Wax: "OZOACE 0355" manufactured by Nippon Seiro Co., Ltd.
- Antioxidant 1: "Nocrac 6C" manufactured by Ouchi Shinko Chemical Industrial Co., Ltd.
- Antioxidant 2: "ANTAGE RD" manufactured by Kawaguchi Chemical Industry Co., Ltd.
- Vulcanization accelerator 1: "Nocceler D" manufactured by Ouchi Shinko Chemical Industrial Co., Ltd.
- Vulcanization accelerator 2: "SOXINOL CZ" manufactured by Sumitomo Chemical Co., Ltd.
- Sulfur: "Powder Sulfur" manufactured by Tsurumi Chemical Industry Co., Ltd.

The evaluation test methods in the examples and comparative examples are as follows.

### (1) Wet Grip Performance

Using a viscoelasticity tester manufactured by Toyo Seiki Co., Ltd., a 2-mm-thick vulcanized rubber sample was subjected to a viscoelasticity test in tensile mode at a frequency of 10 Hz, a static strain of 10%, a dynamic strain of 1%, and a temperature of 0°C to measure the loss factor tan δ. Then, the results were expressed as indexes taking the tan δ in Comparative Example 1 in Table 1, Comparative Example 2 in Table 2, Comparative Example 5 in Table 3, and Comparative Example 6 in Table 4, respectively, as 100. The larger the index, the larger the tan δ, that is, the higher the energy loss, indicating better wet grip performance as a tire.

### (2) Wear Resistance

The abrasion loss of a vulcanized rubber sample was measured using a Lambourn abrasion tester in accordance with JIS K6264-2:2005 at a load of 3 kg, a slip ratio of 20%, a temperature of 23°C, and a sand fall rate of 20 g/min. The results were expressed as indexes taking the reciprocal of the abrasion loss in Comparative Example 1 in Table 1, Comparative Example 2 in Table 2, Comparative Example 5 in Table 3, and Comparative Example 6 in Table 4, respectively, as 100. The larger the index, the smaller the abrasion loss, indicating better wear resistance.

### [First Experiment Example]

Using a Banbury mixer, following the formulations (parts by mass) shown in Table 1 below, first, in the first mixing stage, ingredients excluding sulfur and a vulcanization accelerator were added to a rubber component and kneaded (discharge temperature = 155°C). Next, in the final mixing stage, sulfur and vulcanization accelerators were added to the obtained kneaded product and kneaded (discharge temperature = 90°C), thereby preparing a rubber composition.

In Table 1, "Oil (oil-extended content)" in a formulation is the amount of oil in the oil-extended content incorporated as SSBRs 1 to 3, and the number of parts by mass of each of SSBRs 1 to 3 is the amount as a polymer excluding the oil-extended content. In addition, "Silica/Low-temperature plasticizer" is the mass ratio of the amount of silica to the amount of low-temperature plasticizer. The same applies to Tables 2 to 4.

Each of the obtained rubber compositions was vulcanized at 160°C for 30 minutes to make a vulcanized rubber sample of a predetermined shape, and the wet grip performance and wear resistance were evaluated. The results are as shown in Table 1.

**[Table 1]**

| | Comp. Ex. 1 | Ex. 1 | Ex. 2 | Ex. 3 |
|---|---|---|---|---|
| Formulation (parts by mass) | | | | |
| SSBR 1 (Tg: -27°C) | 100 | 100 | | |
| SSBR 3 (Tg: -2°C) | | | 100 | 100 |
| Silica | 100 | 100 | 100 | 100 |
| Carbon black | 5 | 5 | 5 | 5 |
| Silane coupling agent | 10 | 10 | 10 | 10 |
| Resin 1 (softening point: 115°C) | 30 | 40 | | |
| Resin 2 (softening point: 85°C) | | | 40 | 40 |
| Oil (oil-extended content) | 37.5 | 37.5 | 37.5 | 37.5 |
| Mineral oil | 62.5 | 62.5 | 62.5 | 62.5 |
| Low-temperature plasticizer 2 (SP value: 8.20) | 30 | 20 | 20 | |
| Low-temperature plasticizer 3 (SP value: 8.39) | | | | 20 |
| Zinc oxide | 4 | 4 | 4 | 4 |
| Stearic acid | 2 | 2 | 2 | 2 |
| Wax | 2 | 2 | 2 | 2 |
| Antioxidant 1 | 2 | 2 | 2 | 2 |
| Antioxidant 2 | 1 | 1 | 1 | 1 |
| Vulcanization accelerator 1 | 1 | 1 | 1 | 1 |
| Vulcanization accelerator 2 | 1 | 1 | 1 | 1 |
| Sulfur | 1.5 | 1.5 | 1.5 | 1.5 |
| Silica/Low-temperature plasticizer | 3.33 | 5.00 | 5.00 | 5.00 |
| Silica proportion in filler (mass%) | 95.2 | 95.2 | 95.2 | 95.2 |
| Evaluation (index) | | | | |
| Wet grip performance | 100 | 103 | 107 | 108 |
| Wear resistance | 100 | 103 | 105 | 105 |

As shown in Table 1, in Example 1 where the silica/low-temperature plasticizer ratio is 5.00, compared to Comparative Example 1 where this ratio is lower, the wet grip performance and wear resistance were superior. In Examples 2 and 3, an SSBR having a higher Tg and the resin 2 having a lower softening point compared to Example 1 were used. Accordingly, in Examples 2 and 3, compared to Example 1, further improving effects on wet grip performance and wear resistance were observed.

### [Second Experiment Example]

Rubber compositions were prepared in the same manner as in the first experiment example, except for following the formulations (parts by mass) shown in Table 2 below. Using the obtained rubber compositions, the wet grip performance and wear resistance were evaluated in the same manner as in the first experimental example. The results are as shown in Table 2.

**[Table 2]**

| | Comp. Ex. 2 | Comp. Ex. 3 | Comp. Ex. 4 | Ex. 4 | Ex. 5 | Ex. 6 |
|---|---|---|---|---|---|---|
| Formulation (parts by mass) | | | | | | |
| SSBR 3 (Tg: -2°C) | 100 | 100 | 100 | 100 | 100 | 100 |
| Silica | 145 | 115 | 145 | 145 | 145 | 145 |
| Carbon black | 5 | 35 | 5 | 5 | 5 | 5 |
| Silane coupling agent | 14 | 11 | 14 | 14 | 14 | 14 |
| Resin 1 (softening point: 115°C) | 60 | 60 | 47 | 60 | | |
| Resin 2 (softening point: 85°C) | | | | | 60 | 60 |
| Oil (oil-extended content) | 37.5 | 37.5 | 37.5 | 37.5 | 37.5 | 37.5 |
| Mineral oil | 20 | 20 | 20 | 20 | 20 | 20 |
| Low-temperature plasticizer 1 (SP value: 8.72) | 22 | | | | | |
| Low-temperature plasticizer 2 (SP value: 8.20) | | 22 | 35 | 22 | 22 | |
| Low-temperature plasticizer 3 (SP value: 8.39) | | | | | | 22 |
| Zinc oxide | 4 | 4 | 4 | 4 | 4 | 4 |
| Stearic acid | 2 | 2 | 2 | 2 | 2 | 2 |
| Wax | 2 | 2 | 2 | 2 | 2 | 2 |
| Antioxidant 1 | 2 | 2 | 2 | 2 | 2 | 2 |
| Antioxidant 2 | 1 | 1 | 1 | 1 | 1 | 1 |
| Vulcanization accelerator 1 | 1 | 1 | 1 | 1 | 1 | 1 |
| Vulcanization accelerator 2 | 1 | 1 | 1 | 1 | 1 | 1 |
| Sulfur | 1.5 | 1.5 | 1.5 | 1.5 | 1.5 | 1.5 |
| Silica/Low -temperature plasticizer | 6.59 | 5.23 | 4.14 | 6.59 | 6.59 | 6.59 |
| Silica proportion in filler (mass%) | 96.7 | 76.7 | 96.7 | 96.7 | 96.7 | 96.7 |
| Evaluation (index) | | | | | | |
| Wet grip performance | 100 | 99 | 97 | 102 | 105 | 106 |
| Wear resistance | 100 | 96 | 93 | 104 | 100 | 104 |

As shown in Table 2, in Examples 4 to 6 where the low-temperature plasticizers 2 and 3 each having an SP value within the specified range were incorporated, compared to Comparative Example 2 where the low-temperature plasticizer 1 having an SP value outside the specified range was incorporated, the wet grip performance was superior. In addition, in Examples 5 and 6, compared to Example 4, because a styrene-based resin having a lower softening point was used, a further improvement in wet grip performance was observed. Meanwhile, in Comparative Example 3, although the low-temperature plasticizer 2 having an SP value within the specified range was incorporated, the silica proportion in the filler was low. Accordingly, in Comparative Example 3, compared to Comparative Example 2, no improving effects on wet grip performance and wear resistance were obtained. In Comparative Example 4, although the low-temperature plasticizer 2 having an SP value within the specified range was incorporated, the silica/low-temperature plasticizer ratio was low. Therefore, in Comparative Example 4, compared to Comparative Example 2, the wet grip performance and wear resistance were inferior.

### [Third Experiment Example]

Rubber compositions were prepared in the same manner as in the first experiment example, except for following the formulations (parts by mass) shown in Table 3 below. Using the obtained rubber compositions, the wet grip performance and wear resistance were evaluated in the same manner as in the first experimental example. The results are as shown in Table 3.

**[Table 3]**

| | Comp. Ex. 5 | Ex. 7 | Ex. 8 | Ex. 9 |
|---|---|---|---|---|
| Formulation (parts by mass) | | | | |
| SSBR 2 (Tg: -25°C) | 100 | 100 | | |
| SSBR 3 (Tg: -2°C) | | | 100 | 100 |
| Silica | 145 | 145 | 145 | 145 |
| Carbon black | 5 | 5 | 5 | 5 |
| Silane coupling agent | 14 | 14 | 14 | 14 |
| Resin 2 (softening point: 85°C) | 50 | 50 | 50 | 50 |
| Oil (oil-extended content) | 50 | 50 | 37.5 | 37.5 |
| Mineral oil | 15 | 15 | 24 | 24 |
| Low-temperature plasticizer 1 (SP value: 8.72) | 28 | | | |
| Low-temperature plasticizer 2 (SP value: 8.20) | | 28 | 28 | |
| Low-temperature plasticizer 3 (SP value: 8.39) | | | | 28 |
| Zinc oxide | 4 | 4 | 4 | 4 |
| Stearic acid | 2 | 2 | 2 | 2 |
| Wax | 2 | 2 | 2 | 2 |
| Antioxidant 1 | 2 | 2 | 2 | 2 |
| Antioxidant 2 | 1 | 1 | 1 | 1 |
| Vulcanization accelerator 1 | 1 | 1 | 1 | 1 |
| Vulcanization accelerator 2 | 1 | 1 | 1 | 1 |
| Sulfur | 1.5 | 1.5 | 1.5 | 1.5 |
| Silica/Low-temperature plasticizer | 5.18 | 5.18 | 5.18 | 5.18 |
| Silica proportion in filler (mass%) | 96.7 | 96.7 | 96.7 | 96.7 |
| Evaluation (index) | | | | I |
| Wet grip performance | 100 | 105 | 108 | 109 |
| Wear resistance | 100 | 105 | 104 | 108 |

As shown in Table 3, in Examples 7 to 9, where the low-temperature plasticizers 2 and 3 each having an SP value within the specified range were incorporated, compared to Comparative Example 5 where the low-temperature plasticizer 1 having an SP value outside the specified range was incorporated, the wet grip performance and wear resistance were superior. In addition, in Examples 8 and 9, compared to Example 7, because an SSBR having a lower Tg was used, a further improvement in wet grip performance was observed.

### [Fourth Experiment Example]

Rubber compositions were prepared in the same manner as in the first experiment example, except for following the formulations (parts by mass) shown in Table 4 below. Using the obtained rubber compositions, the wet grip performance and wear resistance were evaluated in the same manner as in the first experimental example. The results are as shown in Table 4.

**[Table 4]**

| | Comp. Ex. 6 | Ex. 10 | Ex. 11 |
|---|---|---|---|
| Formulation (parts by mass) | | | |
| SSBR 2 (Tg: -25°C) | 40 | 40 | 40 |
| SSBR 3 (Tg: -2°C) | 60 | 60 | 60 |
| Silica | 100 | 125 | 125 |
| Carbon black | 30 | 10 | 10 |
| Silane coupling agent | 10 | 12 | 12 |
| Resin 1 (softening point: 115°C) | 45 | 45 | |
| Resin 2 (softening point: 85°C) | | | 45 |
| Oil (oil-extended content) | 42.5 | 42.5 | 42.5 |
| Mineral oil | 10 | 10 | 10 |
| Low-temperature plasticizer 2 (SP value: 8.20) | | | 20 |
| Low-temperature plasticizer 3 (SP value: 8.39) | 20 | 20 | |
| Zinc oxide | 4 | 4 | 4 |
| Stearic acid | 2 | 2 | 2 |
| Wax | 2 | 2 | 2 |
| Antioxidant 1 | 2 | 2 | 2 |
| Antioxidant 2 | 1 | 1 | 1 |
| Vulcanization accelerator 1 | 1 | 1 | 1 |
| Vulcanization accelerator 2 | 1 | 1 | 1 |
| Sulfur | 1.5 | 1.5 | 1.5 |
| Silica/Low-temperature plasticizer | 5.00 | 6.25 | 6.25 |
| Silica proportion in filler (mass%) | 76.9% | 92.6% | 92.6% |
| Evaluation (index) | | | |
| Wet grip performance | 100 | 103 | 106 |
| Wear resistance | 100 | 108 | 110 |

As shown in Table 4, in Examples 10 and 11 where the silica proportion in the filler is 80 mass% or more, compared to Comparative Example 6 where the silica proportion is lower, the wet grip performance and wear resistance were superior. In addition, in Example 11 where the resin 2 having a softening point of 100°C or less was used, compared to Example 10, further improving effects on wet grip performance and wear resistance were observed.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

## Claims

1. A rubber composition for tires, comprising a rubber component containing a solution-polymerized styrene butadiene rubber, a filler including silica, a resin, and a low-temperature plasticizer having an SP value of 8.0 to 8.5 (cal/cm³)^{1/2}, wherein
the amount of the silica is 100 to 300 parts by mass per 100 parts by mass of the rubber component,
the amount of the resin is 40 to 100 parts by mass per 100 parts by mass of the rubber component,
the amount of the low-temperature plasticizer is 15 to 50 parts by mass per 100 parts by mass of the rubber component,
the proportion of the silica in the filler is 80 mass% or more, and
the mass ratio of the amount of the silica to the amount of the low-temperature plasticizer (silica/low-temperature plasticizer) is 5.00 or more.

2. The rubber composition for tires according to claim 1, wherein the solution-polymerized styrene butadiene rubber includes a solution-polymerized styrene butadiene rubber having a glass transition temperature of -20°C or more.

3. The rubber composition for tires according to claim 1 or 2, wherein the resin has a softening point of 100°C or less.

4. The rubber composition for tires according to any one of claims 1 to 3, wherein the resin includes a styrene-based resin.

5. The rubber composition for tires according to any one of claims 1 to 4, wherein the solution-polymerized styrene butadiene rubber includes a modified solution-polymerized styrene butadiene rubber.

6. The rubber composition for tires according to any one of claims 1 to 5, wherein the proportion of the solution-polymerized styrene butadiene rubber in the rubber component is 50 mass% or more.

7. A tire comprising a tread formed from the rubber composition for tires according to any one of claims 1 to 6.
